# EUROPEAN PATENT SPECIFICATION

(11) **EP 4 297 561 B1**
(45) Date of publication and mention of the grant of the patent: **18.11.2026**
(21) Application number: 22702000.5
(22) Date of filing: 28.01.2022
(51) Int. Cl.: A01G 25/16

(54) **IRRIGATION SYSTEM FOR HORTICULTURE AND METHOD FOR OPERATING THE SAME**
BEWÄSSERUNGSSYSTEM FÜR DEN GARTENBAU UND VERFAHREN ZUM BETRIEB DAVON
SYSTÈME D'IRRIGATION POUR HORTICULTURE ET SON PROCÉDÉ DE FONCTIONNEMENT

(30) Priority: 23.02.2021 NL 2027633
(43) Date of publication of application: 03.01.2024
(73) Proprietor: Edigna B.V., 6446 BR Brunssum (NL)
(72) Inventor: PANI, Kharim Mohammed Walter, 6446 BR Brunssum (NL)
(74) Representative: IP Maison
(86) International application number: PCT/EP2022/052090
(87) International publication number: WO 2022/179799

(56) References cited:
- CN-A- 108 681 351
- CN-U- 210 470 285
- US-A1- 2015 032 272
- US-B2- 7 264 177

## Description

### Technical field

The present invention relates to irrigation systems for horticulture. Furthermore, the present invention relates a method for operating the same.

### Background art

Irrigation systems known in the art mainly use techniques such as Nutrient Film Technique (NFT) or Ebb and Flow technique (E&F). In NFT plants may be cultured on a substrate such as soil and a constant flow of irrigating medium (e.g. water optionally comprising nutrients) is provided that passes underneath the substrate whereon the plants are grown. Irrigating medium not absorbed by the plants flows back as drain-water. In E&F plants may be cultured on an inert substrate not containing any nutrients for instance comprising lava rock, rockwool cubes, and fiber. The irrigating medium is pumped into a container comprising the inert substrate and floods the roots of the plants. Subsequently the irrigating medium is allowed to drain away from the roots.

Such irrigation systems typically provide abundant amounts of irrigating medium, mainly comprising water and optionally being supplemented with some nutrients, to the substrate of the irrigated plants. Typically, only 10% of the amount of irrigating medium provided by such irrigation systems is used by the plants and 90% is drained from the substrate. Draining these amounts of irrigating medium is associated with additional costs since water and nutrients are not used effectively, energy is used for providing unused irrigating medium and additional drainage systems are required to drain the amounts of water. Water recycling systems for more efficient use of the drained water are known in the art. However, such systems add even further expenses due to added complexity and maintenance.

Other disadvantages of such irrigation systems are that they are voluminous, prone to waterborne diseases (e.g. Agro-Bacterium), and that they are typically only suitable for monoculture, because they provide a single type of irrigating medium at a time.

Aeroponics is another technique for growing plants that is not associated with such amounts of drained irrigating medium. In aeroponics plants are grown without the use of a substrate and the roots of the plants are suspended in a closed or semi-closed environment. Irrigating medium is sprayed onto the roots of the plants or a mist of irrigating medium is provided into the closed or semi-closed environment. The disadvantage of aeroponics is that it is complex and time consuming and therefore not scalable to an industrial scale without requiring considerable investment. Furthermore, the outlets are easily blocked by crystals formed by saline in the irrigating medium

Drip irrigation is yet another technique for growing plants that is not associated with such amounts of drained irrigating medium. It uses a type of micro-irrigation system allowing water to drip slowly onto the roots of plants. Such system may be suspended above by the substrate surface and configured for providing the drips to fall onto the substrate or such system may be provided within the substrate below the substrate surface. The disadvantage of the drip irrigation system is that it is voluminous and heavy and requires a high amount of maintenance, for instance because the outlets are easily blocked by crystals formed by saline in the irrigating medium. Furthermore, it is typically only suitable for monoculture, because a single type of irrigating medium at a time. Further irrigation systems are known from US2015032272A1 and US7264177B2.

### Object of the invention

It is an object of the present invention to provide an irrigation system for horticulture and a method for doing the same that solves at least one, preferably all disadvantages related to the state of the art.

### Summary of the invention

According to a first aspect of the invention there is provided an irrigation system according to claim 1. Such an irrigation system achieves the object of the invention, because it allows an automated batch-wise operation of transporting batches of irrigating medium (e.g. water optionally comprising nutrients) to specific zones for plant culture, for instance comprising a substrate (e.g. soil), based on an actual need of the plants, because flow means allows the batch of irrigating medium provided by the means for preparing a plurality of batches of irrigating medium to travel through the conduit system towards the corresponding outlet integrally and is thus evacuated integrally or in other words without mixing or mingling with any other batches of irrigating medium being transported by the conduit system.

The irrigation system for horticulture according to the present invention comprises a means for preparing a plurality of batches of irrigating medium configured for irrigating a plurality of zones for plant culture. The irrigation system comprises a conduit system. The conduit system comprises a conduit network comprising an inlet fluidly connected to the means for preparing the plurality of batches of irrigating medium. The conduit network comprises a plurality of outlets associated with individual ones of the plurality of zones for plant culture. The conduit system comprises a valve system configured for providing a route for transporting each of the plurality of batches of irrigating medium from the inlet to a corresponding outlet of the plurality of outlets. The irrigation system comprises flow means configured for evacuating each of the plurality of batches of irrigating medium from the corresponding route through the corresponding outlet of the plurality of outlets. The irrigation system comprises a control unit configured to operate the valve system so as to provide the route for transporting each of the plurality of batches of irrigating medium. The control unit, possibly in combination with either one or both the valve system and the flow means may be configured to evacuate each of the plurality of batches integrally from the corresponding route.

The control unit is configured to operate the valve system to provide the route so as to transport each of the plurality of batches of irrigating medium integrally from the inlet to the corresponding outlet of the plurality of outlets. The control unit may further be configured to operate the flow means for evacuating each of the plurality of batches of irrigating medium integrally from the corresponding route through the corresponding outlet of the plurality of outlets.

The control unit may be configured for evacuating a route for transporting a first batch of the plurality of batches of irrigating medium before a transport of a second batch of the plurality of batches of irrigating medium through the conduit system is initiated. Alternatively, the control unit is configured for evacuating a part of the route for transporting the first batch, which part overlaps a route for transporting the second batch such that a collision between the first and second batch is prevented.

The flow means comprises a gas inlet (e.g. a gas inlet valve) configured to supply gas into the conduit system, for instance introduced into the irrigation system upstream of the conduit system (e.g. the means for preparing the plurality of batches) or introduced into the irrigation system at the location of the conduit system. The supply of gas into the conduit system may facilitate integrally transporting each of the plurality of batches of irrigating medium from the inlet to the corresponding outlet of the plurality of outlets. This may be achieved because gas may be supplied into the conduit system upstream of each batch of the plurality of batches. This may facilitate transporting the batches along the route and evacuating or flushing at least part of the route corresponding to each of the plurality of batches of irrigating medium before such at least part of the route is used by another bath of the plurality of batches. The flow means may further comprise a gas outlet (e.g. a gas outlet valve) configured to drain gas from the conduit system to facilitate integrally transporting each of the plurality of batches of irrigating medium from the inlet to the corresponding outlet of the plurality of outlets.

The flow means optionally comprise flow generating means configured for generating a flow in the conduit system. In the event that the flow is induced by height difference and/or by a flow generating means for instance provided in line, the gas inlet may form part of a pressure equalizing means, which may be controlled passively by the induced pressure difference across the gas inlet or actively by the control unit. Additionally or alternatively, the flow may be generated by a flow generating means for instance connected to the environment and configured to provide pressurized gas to the gas inlet. Such pressurized gas may comprise any gaseous compound, but preferably comprises air (e.g. environmental air), CO₂ or air enriched with CO₂. The pressurized gas may be generated using any suitable means, for instance a pump, a blower or a pressure tank.

In a particularly beneficial embodiment, the conduit network comprises a plurality of nodes (e.g. manifolds) and the valve system is configured to provide the route passing through at least one or preferably a set of nodes, wherein the set of nodes may comprise at least two nodes of the plurality of nodes. Preferably, the conduit network comprises a first stage, comprising a first node of the plurality of nodes and a first valve arrangement of the valve system, and a plurality of second stages configured downstream of the first stage, each comprising a second node of the plurality of nodes and at least a second valve of the valve system. The benefit of providing such a network, wherein each stage may function as a irrigating medium routing unit, is that it is scalable to supply any amount of zones for plant culture with any composition of irrigating medium at any given time interval. Furthermore, it enables building a redundant system, without requiring a doubling of structural features, that may provide a fall-back in case of a malfunction and/or multiple routings acting simultaneously. Beneficially, each of the second stages is similar. Preferable, the first stage and a second stage are similar. This allows configuring the network using a plurality of standardized component (e.g. stages). Furthermore, a skilled person would understand that the network is not limited to a first and a plurality of second stages, and that it can be extended to comprise further downstream stages, such as a plurality of third stages, a plurality of fourth stages etc..

Preferably, the first stage comprises a first stage inlet fluidly connected to, or being the inlet of the conduit network, and a plurality of first stage outlets, and wherein each of the plurality of second stages comprise a second stage inlet fluidly connected to a corresponding one of the plurality of first stage outlets and a plurality of second stage outlets fluidly connected to corresponding ones of the plurality of outlets. For building a redundant irrigation system it may be beneficial to provide second stages comprising at least two second stage inlets.

The valve arrangements may comprise any type of suitable arrangement, such as one or more multiway valves and/or one or more shut-off valves being configured in series or in parallel. In a beneficial embodiment, at least one of the first valve arrangement and the second valve arrangement comprises a plurality of shut-off valves. Preferably, a first shut-off valve of the plurality of shut-off valves is provided at each outlet of the at least one of the first valve arrangement and the second valve arrangement. Additionally or alternatively, such node further comprises a plurality of junctions, wherein a second shut-off valve of the plurality of shut-off valves is provided between each junction of the plurality of junctions. The benefit of using shut-off valves is that they are more robust than multiway valves and simple to maintain. Using first shut-off valves and second shut-off valves has the further benefit that it prevents parts of batches of irrigating medium from entering parts of the conduit network not belonging to the route, for instance caused by leakage or by forces (e.g. hydraulic head) compressing gas residing in those parts of the conduit network. In that respect it is also beneficial to provide such shut-off valves in close proximity downstream of the corresponding node.

Advantageously, the first valve arrangement is configured for providing a first part of the route for transporting each of the plurality of batches of irrigating medium from the first stage inlet to a corresponding one of the plurality of first stage outlets, and wherein the second valve arrangement of the corresponding second stage is configured for providing a second part of the route for transporting each of the plurality of batches of irrigating medium from the second stage inlet to the corresponding second stage outlet.

In a beneficial embodiment, at least one of the first stage and each of the plurality of second stages comprise a flow means. Such flow means may offer redundancy, may improve the speed of transporting a batch of irrigating medium and may allow multiple batches of irrigating medium being transported at least in part simultaneously.

In a beneficial embodiment the flow means comprise a flow generating means configured for providing a pressure difference across each of the plurality of batches of irrigating medium along the corresponding route. This enables providing an irrigation system wherein the main inlet is provided at a lower or substantial same level of elevation as outlets of the plurality of outlets. Furthermore, it may increase the flowrate of the batch of irrigating medium, reducing the required time for irrigating a zone for plant culture. Preferably, the control unit is further configured for operating the flow generating means.

Such flow generating means can be provided at any location within the irrigation system. For instance, the inlet may comprise the flow generating means. Additionally or alternatively, outlets of the plurality of outlets may comprise flow generating means. Providing flow generating means at multiple locations in the system may increase the flowrate. Furthermore, it may facilitate guiding multiple batches of medium through the conduit system simultaneously. In principle, the flow generating means can be any type of flow generating means suitable for moving a fluid (e.g. a liquid like an aqueous solution, a gas like CO₂) through a conduit such as a pump (e.g. membrane pump, piston pump, vacuum pump) or a blower (e.g. compressor). The flow generating means may be configured inline, having an inlet configured downstream and an outlet upstream. Alternatively, flow generating means may also be fluidly connected to the environment at one end, for instance an inlet or an outlet, and fluidly connected to the irrigation system at another end, for instance an outlet or an inlet respectively, so as to generate at the other end either an overpressure or an under pressure, respectively.

Preferably, the flow generating means are provided in at least one of the first stage and each of the plurality of second stages, for instance at the corresponding stage inlet and/or the corresponding stage outlets. For improving speed and/or redundancy, both the first stage and each of the plurality of second stages may be provided with flow generating means.

Additionally or alternatively, the flow means may comprise a pressure equalizing means configured to substantially maintain a pressure difference across each of the plurality of batches of irrigating medium. Such pressure equalizing means may reduce the pressure required for moving the batch of irrigating medium through the conduit system. Preferably, the pressure equalizing means comprises at least one gas inlet comprising a valve configured for allowing a gas to flow in the conduit system, such pressure equalizing means may be provided in at least one of the first stage and the plurality of second stages. Additionally or alternatively, the conduit system comprises collapsible conduits as pressure equalizing means.

Advantageously, at least one of the first stage and the plurality of second stages comprises a gas valve such as an gas inlet valve (e.g. air inlet valve), wherein the gas inlet valve is configured for allowing a flow of gas (e.g. air) after the batch of medium has passed the at least one of the first stage and the plurality of second stages. Additionally or alternatively, at least one of the first stage and the plurality of second stages comprises flow generating means. Embodiments comprising such first and/or second stages provide increased flexibility by allowing multiple batches of medium to simultaneously travel through the irrigation system.

Beneficially, the conduit system comprises at least one of a pressure relief valve and a drain. A pressure relief valve may provide a safety feature that may prevent a pressure build-up in the system, for instance if a valve is malfunctioning. A drain may provide a means for removing medium from the system for instance for maintenance purposes or in case of an emergency.

The means for preparing the plurality of batches of irrigating medium may comprise a vessel configured for holding the batch of irrigating medium of the plurality of batches of irrigating medium. The advantage of using a vessel is that it is very suitable for being configured for a batch like operation, wherein each batch of medium is conditioned. For instance, the vessel may comprise a heating element for conditioning the temperature of the batch of irrigating medium. The vessel may comprise at least one vessel inlet configured for providing an irrigation medium component corresponding to the batch of irrigating medium, wherein the irrigation medium component comprises at least one of a batch of water, a fertilizer, a nutrient, an acid, a base, a pH buffer solution, an electrolyte. The vessel may for instance comprise a water inlet configured for providing a batch of water corresponding to the batch of irrigating medium. The vessel may further comprise at least one other inlet for providing a further medium component comprising at least one of a list consisting of: a fertilizer, a nutrient, an acid, a base, a pH buffer solution, an electrolyte. The vessel may comprise mixing means configured for mixing the batch of medium, such that a homogeneous medium can be obtained. The vessel may comprise at least one measuring means for measuring a parameter of the batch of medium, wherein the parameter is at least one of a volume, a temperature, a pH and an electrical conductivity. This allows monitoring and/or controlling the medium composition, condition and/or amount.

At least one of the plurality of outlets may comprise a nozzle being at least one of a spray nozzle, an atomizer nozzle, a mist nozzle, a drip nozzle. Such features enable different irrigation methods and allows tailoring the irrigation that best suits the needs of the specific type of plant or the stage of development. A species of plants having an optimal growth using drip irrigation may for instance germinate more easily in a mist.

Preferably, the conduit network comprises a plurality of resilient conduits configured for being at least one of compliant and flexible. Such conduits can be made of any type of material (e.g. metal, rubber, polymer) and can be rigid. It is however preferred to provide conduits that are configured as being resilient wherein resilient comprises at least one of compliant and flexible. The benefit of such conduits is that it provides a better regulation of the flow of the batch of medium through the irrigation system. Next to the conduit system, the irrigation system according to the present invention typically comprises conduits, preferably resilient conduits, for making fluid connections between means for preparing a plurality of batches of irrigating medium.

According to a second aspect of the invention there is provided a method for horticulture irrigation according to claim 11. The method comprising the steps of: preparing a first batch of irrigating medium, determining a first route through a conduit system for providing the prepared first batch of irrigating medium to a first zone of a plurality of zones for plant culture, transporting the prepared first batch through the conduit system along the first route, evacuating the first batch integrally from the first route, preparing a second batch of irrigating medium, determining a second route through a conduit system for providing the prepared second batch of irrigating medium to a second zone of a plurality of zones for plant culture, transporting the prepared second batch through the conduit system along the second route, evacuating the second batch integrally from the second route. The step of transporting the second batch may be preceded at least in part by the step of transporting the first batch. Additionally, the step of transporting the second batch may be initiated before completing the step of integrally evacuating the first batch. Preferably, the control unit of the present invention is configured for performing the method according to the second aspect of the present invention.

Preferably, transporting each of the prepared batches of irrigating medium through the conduit system along the corresponding route comprises the step of setting valves of a valve system of the conduit system in accordance with the corresponding route.

Advantageously, determining the first route and the second route each comprises selecting at least one node or a set of nodes comprising at least two nodes of the conduit system along which the first route or the second route is to pass.

In a beneficial embodiment, at least one node associated with the first route overlaps with at least one node associated with the second route. Providing such a staged network (e.g. multistage interconnection network, segmented network) provides for flexibility in irrigating multiple plant culture zones, with a limited number of conduits.

The invention is ideally suitable for transporting a liquid irrigating medium to zones for plant culture. However, it may also be used for transporting a gas (e.g. CO₂) to zones for plant culture. In such an embodiment, the inlet of the conduit network may additionally or alternatively be connected to a gas supply. It may be clear that in an embodiment wherein the irrigating system is not used for transporting a liquid irrigating medium, that the means for preparing a plurality of batches of culture medium does not form an essential feature of the irrigation system.

Embodiments of irrigation system for horticulture according to the present invention may further comprise at least one flow sensor for monitoring the flow oft he batch or irrigating medium. Preferably, the system comprises a plurality of flow sensors for monitoring the flow and/or the functioning of the valve system.

### Brief description of the figures

The invention will now be explained in greater detail with reference to the figures in which equal or similar parts are indicated by the same reference signs and in which:
Figure 1 shows a schematic representation of an irrigating system according to the present invention.
Figure 2 shows a schematic representation of a stage configuration suitable for an irrigating system according to the present invention.
Figure 3 shows a schematic representation of an irrigating system according to the present invention in a staged network configuration.

### Description of embodiments

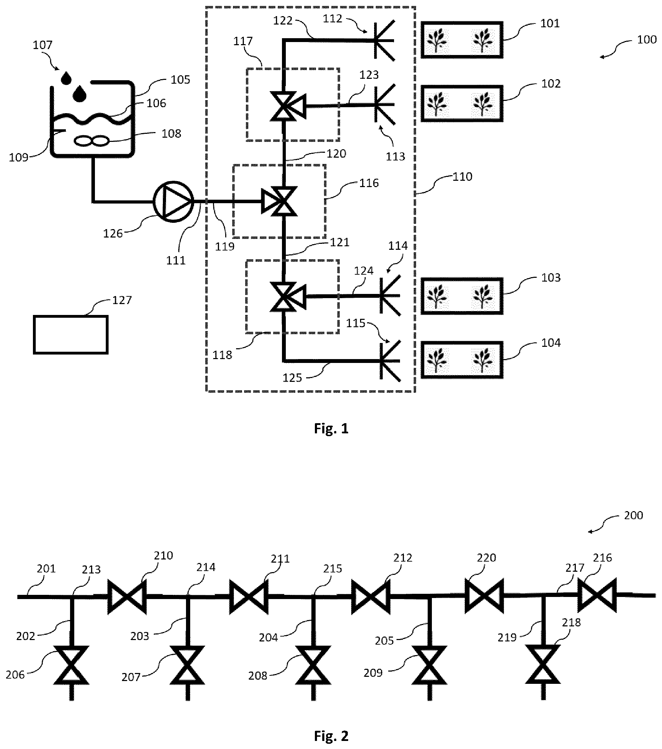

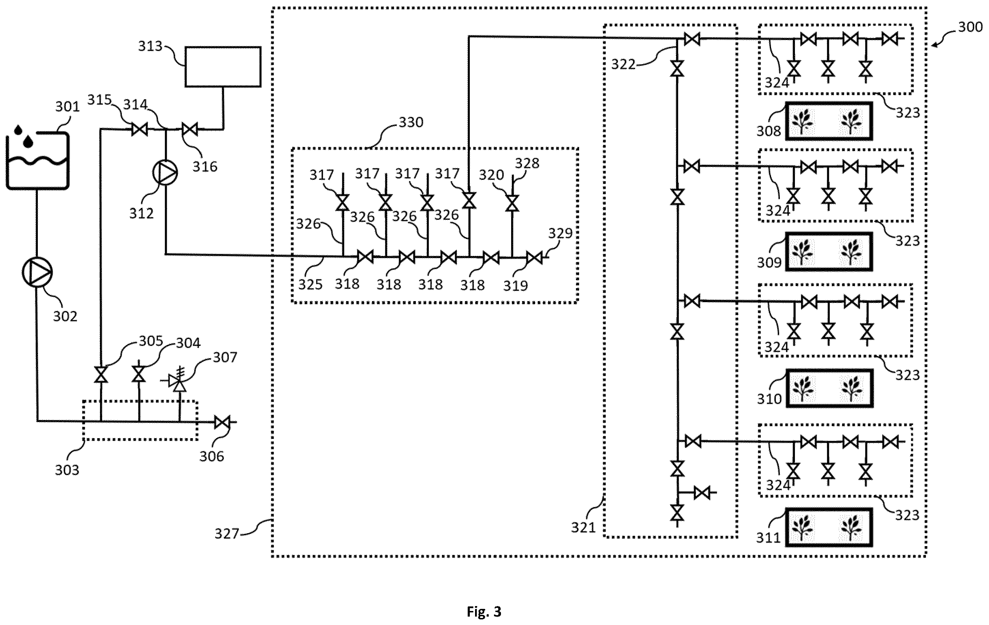

Referring to Figs. 1 and 3, an irrigation system 100, 300 for irrigating a plurality of zones 101, 102, 103, 104, 308, 309, 310, 311 for plant culture comprises a vessel 105, 301 for holding fluids as a means to prepare a batch of irrigating culture medium 106 tailored to the requirements of specific zones of the plurality of zones 101, 102, 103, 104, 308, 309, 310, 311. The vessel 105, 301 may comprise means 107 for supplying ingredients of the culture medium (e.g. water, fertilizer, electrolyte, acid, base), for instance an inlet connected to a dosing means (e.g. pump). The vessel 105, 301 may further comprise mixing means 108, for instance a stirrer or return conduit provided with a pump, and optionally at least one sensor (not shown) for determining parameters such as a fluid level, a pH, an electrical conductivity, a temperature. Such sensors may be provided in the vessel itself or in the return conduit. The vessel 105, 301 may further comprise a heating unit 109 for heating the batch of culture medium 106 to a predetermined temperature.

The irrigation system 100, 300, further comprises a conduit system 110, 327, for transporting the batch of irrigating medium 106 along a route towards the corresponding one of the plurality of zones 101, 102, 103, 104, 308, 309, 310, 311. To that end the conduit system comprises an inlet 111, fluidly connected to the vessel 105, 301 and a plurality of outlets 112, 113, 114, 115 for irrigating multiple zones 101, 102, 103, 104, 308, 309, 310, 311. The inlet 111, is fluidly connected to the plurality of outlets 112, 113, 114, 115 via a conduit network comprising a plurality of conduits 119, 120, 121, 122, 123, 124, 125 interconnected via a valve system comprising a plurality of valve arrangements.

The conduit network is configured as a staged network, wherein a first stage 116, is fluidly connected to a plurality of second stages 117, 118, 321 via conduits 120, 121. Furthermore, a first one 117, of the plurality of the second stages is fluidly connected to a first set of outlets 112, 113 of the plurality of outlets and a second one 118 of the plurality of the second stages is fluidly connected to a second set of outlets 114, 115 of the plurality of outlets. In the shown embodiment each stage comprises two outlets, however each stage may comprise any number of outlets, such as four. It may be understood that the shown conduit system may be expanded with any number of consecutive stages. The outlets of a last stage may each comprise a different type of nozzle, for instance configured for providing a mist, a pray, drops or a gas, wherein each of the outlets of that last stage are configured to irrigate or condition a single zone for plant culture. The latter may be ideally suitable for culturing plant in an automated fashion throughout the different stages of the growth cycle (e.g. germination, growth, seed production).

The valve system comprises a plurality of valve arrangements provided at each of the first 116 and second 117, 118 stages. The valve system is configured to provide a route for transporting the batch of culture medium 106 from the inlet 111 towards one of the plurality of outlets 112, 113, 114, 115. Suitable valve arrangements 116, 117, 118 typically comprise a node with a node inlet and a plurality of node outlets, wherein valves are provided to fluidly connect the node inlet with one node outlet of the plurality of node outlets. An example of such a valve arrangement is a multiway valve. Another example of such a valve arrangement comprises a plurality of shut-off valves.

For example, Fig. 2 shows a node 200 with a node inlet 201 and a plurality of node outlets 202, 203, 204, 205, comprising shut-off valves 206, 207, 208, 209. Such a node 200 may comprise a plurality of consecutive junctions 213, 214, 215 between the node inlet 201 and a last node outlet 205 of the plurality of node outlets 202, 203, 204, 205 in a direction of flow, wherein a second shut-off valve 210, 211 of the plurality of shut-off valves may be provided between each junction of the plurality of junctions 213, 214, 215. Optionally, the last node outlet 205 of the plurality of node outlets 202, 203, 204, 205 in a direction of flow comprises an additional shut-off valve 212, which may prevent irrigating medium from entering a part of the node not being part of the corresponding route. It may further be evident that any suitable combination of valves (e.g. multiway valve, shut-off valve) may be used at each stage. Optionally, such a node 200 may further comprise a shut-off valve 216 connected to a drain 217 for draining any fluid from a part of the conduit network for instance in case of maintenance and/or a shut-off valve 218 connected to a gas inlet 219 for instance for allowing air to flow into the node when a batch of irrigating medium has passed the node 200. Optionally, the node 200 comprises another additional shut-off valve 220, which may prevent irrigating medium from entering part of the node relating to the drain 217 or the gas inlet 219.

The irrigation system 100, 300 may further comprise a pump 126, 302, 312 as a flow means to transport the batch of irrigating medium 106 integrally from the vessel 105 to an outlet 112, 113, 114, 115. Such pump may be provided between the vessel 105, 301 and the conduit system 110, 327 but may additionally or alternatively be provided in the conduit system, for instance at the outlets 112, 113, 114, 115 of the plurality of outlets and/or at one or more of the stages 116, 117, 118. Additionally or alternatively, the vessel 105, 301 may be placed at an elevated location with respect to the plurality of outlets to provide a pressure head or pressure difference for transporting the batch of irrigating medium 106. Pressure equalizing means (e.g. pressure relief valves, collapsible conduits) may be provided at suitable locations of the irrigating system dependent on the flow means provided, to reduce the required force for transporting the irrigating medium 106 through the conduit system 110, 327.

The valve system is operated by a control unit 127. The control unit 127 may further be configured to control the provided flow means, such as pump 126, 302, 312. Additionally or alternatively, the preparation of the batch of irrigating medium 106 in vessel 105, 301 may be controlled by the control unit 127, for instance the control unit controls at least one of the mixing means 108, the heating unit 109, means 107 for supplying ingredients and the at least one sensor (not shown).

Referring to Fig. 3, in an exemplary embodiment of an irrigation system 300 according to the present invention, a vessel 301 may be fluidly connected to an inlet of a first pump 302 (eg. diaphragm pump), wherein the first pump 302 may be configured to empty the vessel 301 if activated. An output of the first pump 302 may be connected to a first splitter 303, for instance comprising a plurality of interconnected T-splitters, comprising three shut-off valves 304, 305, 306 and a pressure relief valve 307. The pressure relief valve 307 may function as security feature to avoid pressure building up in the conduit network if one of the valves is not opening, for instance due to malfunction. A first shut-off valve 304 of the first splitter 303 may provide a drain output for draining the vessel 301 in case of for instance an emergency situations or in case of maintenance (e.g. cleaning). A second shut-off valve 305 of the first splitter 303 may provide a fluid connection to a conduit system 327 configured for transporting a batch of irrigating medium to a target zone 308, 309, 310, 311. A third shut-off valve 306 of the first splitter 303 may be provided which acts as an air inlet, for instance for creating an airflow to transport the batch of irrigating medium in the conduit system. This may be beneficial when a new batch is prepared while the previous batch is being transported. In such case, the vessel 301 may be disconnected from the conduit system 327 (e.g. by switching of the first pump 302 or by providing an additional valve between the vessel 301 and the splitter 303) when the batch has passed the first splitter. Subsequently, the third shut-off valve 306 may be opened allowing air to enter while a second pump 312 provides a pressure difference for transporting the batch through the conduit system 327. Such an air inlet may be provided with a filter for instance for keeping particulate matter or microorganisms from entering the irrigation system.

The irrigation system 300 may further comprise a gas supply 313, wherein both the gas supply 313 and an output of the second valve 305 of the first splitter 303 are fluidly connected to an input the second pump 312 via a T-splitter 314. The T-splitter 314 may comprise two shut-off valves 315, 316, one provided at either inlet of the T-splitter 314.

The conduit system 327 may comprise a first stage 330, comprising a first stage inlet 325 inlet, a plurality of first stage outlets 326 and a first valve arrangement 317, 318, wherein first shut-off valves 317 of the first stage may be provided at each of the outlets 326 and second shut-off valves 318 may be provided between each of the consecutive outlet 326. The first stage 330 may further comprise a drain 329 comprising a third shut-off valve 319 that may be configured for draining the first stage 330. Additionally or alternatively, the first stage 330 may comprise an air inlet 328 comprising a fourth shut-off valve 320, which is for instance configured for creating an airflow or allowing an air flow to enter the first stage to transport the batch of irrigating medium in the conduit system. The shown embodiment comprises a specific configuration but may be configured in any suitable way, for instance using one or more multi-way valves and/or shut-off valves.

The conduit system 327 may comprise a plurality of second stages 321, wherein each second stage inlet 322 is fluidly connected to a different one of the plurality of first stage outlets 326. Such a second stage may have a configuration comprising shut-off valves as shown in Fig. 3, wherein the second stage comprises a drain and an air inlet, or any suitable different configuration. For instance, configurations similar to the ones described for Fig. 2. Additionally or alternatively, the second stage may comprise a multi-way valve.

The conduit system 327 may further comprise a plurality of third stages 323, wherein each third stage is fluidly connected to a different outlet 324 of the second stage 321. Each third stage comprises a plurality of outlets configured for irrigating a different one of the culturing zones 308, 309, 310, 311. Preferably, each outlet of a third stage comprises a different type of nozzle for supporting culturing plants through different stages of the growth cycle. A third stage may have a configuration comprising shut-off valves as shown in Fig. 3, wherein the third stage comprises a drain, or any other suitable configuration. For instance, configurations similar to the ones described for Fig. 2. Additionally or alternatively, the second stage may comprise a multi-way valve.

## Claims

1. Irrigation system for horticulture (100), comprising
means (105) for preparing a plurality of batches (106) of irrigating medium configured for irrigating a plurality of zones (101, 102, 103, 104) for plant culture,
a conduit system (110), comprising
a conduit network (119, 120, 121, 122, 123, 124, 125) comprising
an inlet (111) fluidly connected to the means for preparing the plurality of batches of irrigating medium, and
a plurality of outlets (112, 113, 114, 115) associated with individual ones of the plurality of zones (101, 102, 103, 104) for plant culture, and
a valve system configured for providing a route for transporting each of the plurality of batches (106) of irrigating medium from the inlet (111) to a corresponding outlet of the plurality of outlets (112, 113, 114, 115),
flow means (126) configured for evacuating each of the plurality of batches (106) of irrigating medium from the corresponding route through the corresponding outlet of the plurality of outlets (112, 113, 114, 115), **characterized in that** the irrigation system further comprises a control unit (127) configured to operate the valve system so as to provide the route for transporting each of the plurality of batches (106) of irrigating medium integrally from the inlet to the corresponding outlet of the plurality of outlets, and wherein the flow means comprises at least one gas inlet configured to supply gas into the conduit system, preferably wherein the at least one gas inlet comprises a gas inlet valve.

2. Irrigation system according to claim 1, wherein the conduit network comprises a plurality of nodes (116, 117, 118) and wherein the valve system is configured to provide the route passing through at least one node of the plurality of nodes.

3. Irrigation system according to claim 2, wherein the conduit network comprises a first stage (116), comprising a first node of the plurality of nodes and a first valve arrangement of the valve system, and a plurality of second stages (117, 118) configured downstream of the first stage, each comprising a second node of the plurality of nodes and a second valve arrangement of the valve system, preferably wherein the first stage comprises a first stage inlet fluidly connected to the inlet of the conduit network, and a plurality of first stage outlets, and wherein each of the plurality of second stages comprise a second stage inlet fluidly connected to a corresponding one of the plurality of first stage outlets and a plurality of second stage outlets fluidly connected to corresponding ones of the plurality of outlets, preferably wherein the first valve arrangement is configured for selectively fluidly connecting the first stage inlet and a first stage outlet of the plurality of first stage outlets and more preferably wherein the second valve arrangement is configured for selectively fluidly connecting the corresponding second stage inlet and a second stage outlet of the plurality of second stage outlets, preferably wherein at least one of the first valve arrangement and the second valve arrangement comprises a plurality of shut-off valves (206, 207, 208, 209, 210, 211, 212), preferably wherein a first shut-off valve (206, 207, 208, 209) of the plurality of shut-off valves is provided at each outlet of the corresponding node, preferably wherein the corresponding node further comprises a plurality of junctions, wherein a second shut-off valve (210, 211) of the plurality of shut-off valves is provided between each junction of the plurality of junctions, preferably wherein at least one of the first stage and each of the plurality of second stages comprise a flow means.

4. Irrigation system according to claim 3, wherein at least one of the first stage and each of the plurality of second stages comprise a flow means, and wherein the flow means comprise a gas inlet valve configured to supply a flow of gas after the batch of medium has passed the at least one of the first stage and the plurality of second stages, preferably the gas inlet valve is an air inlet valve.

5. Irrigation system according to any one of the previous claims, wherein the flow means comprise a flow generating means configured for providing a pressure difference across each of the plurality of batches of irrigating medium along the corresponding route and wherein the control unit is further configured to operate the flow generating means, preferably wherein the flow generating means comprise a pump, such as a membrane pump.

6. Irrigation system according to any one of the previous claims, wherein the flow means comprises a pressure equalizing means (306, 320) configured to substantially maintain a pressure difference across each of the plurality of batches of irrigating medium, preferably wherein the pressure equalizing means comprises at least one gas valve configured for allowing a gas to flow in the conduit system.

7. Irrigation system according to any one of the previous claims, wherein the means for preparing the plurality of batches of irrigating medium comprise a vessel configured for holding a batch of irrigating medium of the plurality of batches of irrigating medium.

8. Irrigation system according to claim 7, wherein the vessel is configured for conditioning the batch of irrigating medium, wherein the vessel comprises at least one of:
- a heating element (109) configured for conditioning the temperature of the batch of irrigating medium.
- at least one vessel inlet (107) configured for providing an irrigation medium component corresponding to the batch of irrigating medium, wherein the irrigation medium component comprises at least one of a batch of water, a fertilizer, a nutrient, an acid, a base, a pH buffer solution, an electrolyte.
- mixing means (108) configured for mixing the batch of irrigating medium.
- at least one measuring means for measuring a parameter of the batch of irrigating medium, wherein the parameter is at least one of a volume, a temperature, a pH and an electrical conductivity.

9. Irrigation system according to any one of the previous claims, wherein at least one of the plurality of outlets comprises a nozzle being at least one of a spray nozzle, an atomizer nozzle, a mist nozzle, a drip nozzle.

10. Irrigation system according to any one of the previous claims, wherein the conduit network comprises a plurality of resilient conduits configured for being at least one of elastic, compliant, collapsible, extendible and flexible.

11. Method for operating an irrigation system of any one of the previous claims, the method comprising the steps of:
• preparing a first batch of irrigating medium,
• determining a first route through the conduit system for providing the first batch of irrigating medium to a first zone of a plurality of zones for plant culture
• transporting the prepared first batch of irrigating medium through the conduit system along the first route
• evacuating the first batch of irrigating medium integrally from the first route
• preparing a second batch of irrigating medium,
• determining a second route through the conduit system for providing the second batch of irrigating medium to a second zone of a plurality of zones for plant culture
• transporting the second batch of irrigating medium through the conduit system along the second route
• evacuating the second batch of irrigating medium integrally from the second route.

12. Method of claim 11 wherein transporting each of the first and second batches of irrigating medium through the conduit system along the corresponding route comprises the step of setting valves of a valve system of the conduit system in accordance with the corresponding route.

13. Method of claim 11 or 12, wherein determining the first route and the second route each comprises selecting a plurality of nodes of the conduit system along which the first route or the second route is to pass.

14. Method of claim 13, wherein at least one node of the plurality of nodes associated with the first route overlaps with at least one node of the plurality of nodes associated with the second route.

15. Method according to any one of claims 11 to 14, wherein the step of transporting the second batch is preceded at least in part by the step of transporting the first batch, and wherein the step of transporting the second batch is initiated before completing the step of integrally evacuating the first batch.

## Patentansprüche

1. Bewässerungssystem für den Gartenbau (100), aufweisend
eine Einrichtung (105) zum Vorbereiten einer Mehrzahl an Chargen (106) von Bewässerungsmittel, die für das Bewässern einer Mehrzahl von Bereichen (101, 102, 103, 104) betreffend eine Pflanzkultur ausgelegt sind,
ein Leitungssystem (110), aufweisend
ein Leitungsnetz (119, 120, 121, 122, 123, 124, 125) aufweisend
einen Einlass (111), der mit der Einrichtung zum Vorbereiten einer Mehrzahl an Chargen von Bewässerungsmittel fluidisch verbunden ist, und
eine Mehrzahl an Auslässen (112, 113, 114, 115), die einzelnen der Mehrzahl von Bereichen (101, 102, 103, 104) betreffend eine Pflanzkultur zugeordnet sind, und
ein Ventilsystem, das ausgelegt ist, einen Pfad zum Transportieren jeder aus der Mehrzahl an Chargen (106) von Bewässerungsmittel von dem Einlass (111) zu einem zugehörigen Auslass der Mehrzahl an Auslässen (112, 113, 114, 115) bereitzustellen,
Flussförderungsmittel (126), die ausgelegt sind, jede der Mehrzahl an Chargen (106) von Bewässerungsmittel durch den entsprechenden Auslass aus der Mehrzahl an Auslässen (112, 113, 114, 115) aus dem entsprechenden Pfad zu entleeren, **dadurch gekennzeichnet, dass** das Bewässerungssystem ferner eine Steuereinheit (127) aufweist, die ausgelegt ist, das Ventilsystem zu betätigen, um so den so Pfad zum Transportieren jeder aus der Mehrzahl an Chargen (106) von Bewässerungsmittel geschlossen von dem Einlass zu dem entsprechenden Auslass aus der Mehrzahl an Auslässen bereitzustellen, und wobei die Flussförderungsmittel zumindest einen Gaseinlass aufweisen, der ausgelegt ist, in das Leitungssystem Gas zuzuführen, wobei der zumindest eine Gaseinlass vorzugsweise ein Gaseinlassventil aufweist.

2. Bewässerungssystem gemäß Anspruch 1, wobei das Leitungsnetz eine Mehrzahl an Knoten (116, 117, 118) aufweist und wobei das Ventilsystem ausgelegt ist, den Pfad über zumindest einen Knoten aus der Mehrzahl an Knoten bereitzustellen.

3. Bewässerungssystem gemäß Anspruch 2, wobei das Leitungsnetz eine erste Stufe (116), die einen ersten Knoten aus der Mehrzahl an Knoten und eine erste Ventilanordnung des Ventilsystems aufweist, und eine Mehrzahl an zweiten Stufen (117, 118) aufweist die stromabwärts der ersten Stufe vorgesehen sind und jeweils einen zweiten Knoten aus der Mehrzahl an Knoten aufweisen sowie eine zweite Ventilanordnung des Ventilsystems, wobei vorzugsweise die erste Stufe einen Erststufeneinlass, der mit dem Einlass des Leitungsnetzes fluidisch verbunden ist, und eine Mehrzahl an Erststufenauslässen aufweist, und wobei jede aus der Mehrzahl an zweiten Stufen einen Zweitstufeneinlass, der mit einem entsprechenden Erststufenauslass der Mehrzahl an Erststufenauslässen fluidisch verbunden ist und eine Mehrzahl an Zweitstufenauslässen aufweist, die mit entsprechenden Auslässen der Mehrzahl an Auslässen fluidisch verbunden sind, wobei vorzugsweise die erste Ventilanordnung zum wahlweisen fluidischen Verbinden des Erststufeneinlasses mit einem Erststufenauslass der Mehrzahl an Erststufenauslässen ausgelegt ist und wobei weiter vorzugsweise die zweite Ventilanordnung zum wahlweisen fluidischen Verbinden des entsprechenden Zweitstufeneinlasses mit einem Zweitstufenauslass aus der Mehrzahl an Zweitstufenauslässen ausgelegt ist, wobei vorzugsweise zumindest eine der ersten Ventilanordnung und der zweiten Ventilanordnung eine Mehrzahl an Absperrventilen (206, 207, 208, 209, 210, 211, 212) aufweist, wobei vorzugsweise ein erstes Absperrventil (206, 207, 208, 209) aus der Mehrzahl an Absperrventilen an jedem Auslass des entsprechenden Knotens bereitgestellt ist, wobei der entsprechende Knoten vorzugsweise eine Mehrzahl an Verbindungspunkten aufweist, wobei zwischen jedem Verbindungspunkt aus der Mehrzahl an Verbindungspunkten ein zweites Absperrventil (210, 211) aus der Mehrzahl an Absperrventilen bereitgestellt ist, wobei vorzugsweise zumindest eine aus der ersten Stufe und jeder aus der Mehrzahl an zweiten Stufen Flussförderungsmittel aufweist.

4. Bewässerungssystem gemäß Anspruch 3, wobei zumindest eine aus der ersten Stufe und jeder aus der Mehrzahl an zweiten Stufen Flussförderungsmittel aufweist, und wobei die Flussförderungsmittel ein Gaseinlassventil aufweisen, das ausgelegt ist, einen Gasstrom zuzuführen, nachdem die Charge aus dem Mittel zumindest eine aus der ersten Stufe und der Mehrzahl an zweiten Stufen durchlaufen hat, wobei das Gaseinlassventil vorzugsweise ein Lufteinlassventil ist.

5. Bewässerungssystem gemäß einem der vorhergehenden Ansprüche, wobei die Flussförderungsmittel Flusserzeugungsmittel aufweisen, die ausgelegt sind, über jede der Mehrzahl an Chargen von Bewässerungsmittel längs dem entsprechenden Pfad einen Druckunterschied bereitzustellen und wobei die Steuereinheit ferner ausgelegt ist, die Flusserzeugungsmittel zu betätigen, wobei die Flusserzeugungsmittel vorzugsweise eine Pumpe wie etwa eine Membranpumpe aufweisen.

6. Bewässerungssystem gemäß einem der vorhergehenden Ansprüche, wobei die Flussförderungsmittel Druckausgleichsmittel (306, 320) aufweisen, die ausgelegt sind, über jede der Mehrzahl an Chargen von Bewässerungsmittel einen Druckunterschied im Wesentlichen aufrechtzuerhalten, wobei die Druckausgleichsmittel vorzugsweise zumindest ein Gasventil aufweisen, das ausgelegt ist, ein Strömen eines Gases in dem Leitungssystem zu ermöglichen.

7. Bewässerungssystem gemäß einem der vorhergehenden Ansprüche, wobei die Einrichtung zum Vorbereiten einer Mehrzahl an Chargen von Bewässerungsmittel zumindest ein Gefäß aufweist, das zum Fassen einer Charge Bewässerungsmittel aus der Mehrzahl an Chargen von Bewässerungsmittel ausgelegt ist.

8. Bewässerungssystem gemäß Anspruch 7, wobei das Gefäß ausgelegt ist, die Charge Bewässerungsmittel in einen vorbestimmten Zustand zu bringen, wobei das Gefäß zumindest eines aufweist aus:
- Einem Heizelement (109), das ausgelegt ist, die Temperatur der Charge von Bewässerungsmittel einzustellen.
- Zumindest einem Ventileinlass (107), der ausgelegt ist, eine Bewässerungsmittelkomponente entsprechend der Charge Bewässerungsmittel bereitzustellen, wobei die Bewässerungsmittelkomponente zumindest eines aus einer Charge Wasser, einem Dünger, einem Nährstoff, einer Säure, einer Lauge, einer pH-Puffer-Lösung, einem Elektrolyten aufweist.
- Einer Mischeinrichtung (108), die ausgelegt ist, die Charge Bewässerungsmittel zu mischen.
- Zumindest einer Messeinrichtung zum Messen eines Parameters der Charge Bewässerungsmittel, wobei der Parameter zumindest eines ist aus einem Volumen, einer Temperatur, einem pH-Wert und einer elektrischen Leitfähigkeit.

9. Bewässerungssystem gemäß einem der vorhergehenden Ansprüche, wobei zumindest einer aus der Mehrzahl an Auslässen eine Düse in Form von zumindest einer aus einer Sprühdüse, einer Zerstäuberdüse, einer Nebeldüse, einer Tropfdüse aufweist.

10. Bewässerungssystem gemäß einem der vorhergehenden Ansprüche, wobei das Leitungsnetz eine Mehrzahl an widerstandsfähigen Leitungen aufweist, die ausgelegt sind, zumindest eines zu sein aus elastisch, nachgebend, zusammenfallend, dehnbar und flexibel.

11. Verfahren zum Betreiben eines Bewässerungssystems gemäß einem der vorhergehenden Ansprüche, wobei das Verfahren die Schritte aufweist:
• Vorbereiten einer ersten Charge Bewässerungsmittel,
• Festlegen eines ersten Pfades durch das Leitungssystem, um die erste Charge Bewässerungsmittel zu einem ersten Bereich aus einer Mehrzahl von Bereichen betreffend eine Pflanzkultur bereitzustellen
• Transportieren der vorbereiteten ersten Charge Bewässerungsmittel den ersten Pfad entlang durch das Leitungssystem
• vollständiges Auslassen der ersten Charge Bewässerungsmittel aus dem ersten Pfad
• Vorbereiten einer zweiten Charge Bewässerungsmittel
• Festlegen eines zweiten Pfades durch das Leitungssystem, um die zweite Charge Bewässerungsmittel zu einem zweiten Bereich aus einer Mehrzahl von Bereichen betreffend eine Pflanzkultur bereitzustellen
• Transportieren der zweiten Charge Bewässerungsmittel den zweiten Pfad entlang durch das Leitungssystem
• vollständiges Auslassen der zweiten Charge Bewässerungsmittel aus dem zweiten Pfad.

12. Verfahren nach Anspruch 11, wobei das Transportieren jeder der ersten und zweiten Charge Bewässerungsmittel durch das Leitungssystem den entsprechenden Pfad entlang den Schritt des Einstellens von Ventilen eines Ventilsystems des Leitungssystems dem entsprechenden Pfad gemäß aufweist.

13. Verfahren nach Anspruch 11 oder 12, wobei das Festlegen des ersten Pfads und des zweiten Pfads jeweils das Auswählen einer Mehrzahl an Knoten des Leitungssystems, an denen entlang der erste Pfad oder der zweite Pfad führen sollen, aufweist.

14. Verfahren nach Anspruch 13, wobei sich zumindest ein Knoten aus der Mehrzahl an Knoten, die zu dem ersten Pfad gehören, mit zumindest einem Knoten aus der Mehrzahl an Knoten, die zu dem zweiten Pfad gehören, überschneidet.

15. Verfahren nach einem der Ansprüche 11 bis 14, wobei dem Schritt des Transportierens der zweiten Charge der Schritt des Transportierens der ersten Charge zumindest in Teilen vorausgeht, und wobei der Schritt des Transportierens der zweiten Charge eingeleitet wird, bevor der Schritt des vollständigen Auslassens der ersten Charge abgeschlossen ist.

## Revendications

1. Système d'irrigation pour l'horticulture (100), comprenant
des moyens (105) de préparation d'une pluralité de lots (106) de milieu d'irrigation configurés pour irriguer une pluralité de zones (101, 102, 103, 104) pour la culture de plantes,
un système de conduits (110), comprenant
un réseau de conduits (119, 120, 121, 122, 123, 124, 125) comprenant
une entrée (111) raccordée de manière fluidique aux moyens de préparation de la pluralité de lots de milieu d'irrigation, et
une pluralité de sorties (112, 113, 114, 115) associées à des zones individuelles parmi la pluralité de zones (101, 102, 103, 104) pour la culture de plantes, et
un système de vannes configuré pour fournir un itinéraire pour transporter chacun de la pluralité de lots (106) de milieu d'irrigation de l'entrée (111) jusqu'à une sortie correspondante parmi la pluralité de sorties (112, 113, 114, 115),
des moyens d'écoulement (126) configurés pour évacuer chacun de la pluralité de lots (106) de milieu d'irrigation de l'itinéraire correspondant à travers la sortie correspondante parmi la pluralité de sorties (112, 113, 114, 115), **caractérisé en ce que** le système d'irrigation comprend en outre une unité de commande (127) configurée pour faire fonctionner le système de vannes de façon à fournir l'itinéraire pour transporter chacun de la pluralité de lots (106) de milieu d'irrigation en entier de l'entrée jusqu'à la sortie correspondante parmi la pluralité de sorties, et dans lequel les moyens d'écoulement comprennent au moins une entrée de gaz configurée pour alimenter le système de conduits en gaz, de préférence dans lequel l'au moins une entrée de gaz comprend une vanne d'entrée de gaz.

2. Système d'irrigation selon la revendication 1, dans lequel le réseau de conduits comprend une pluralité de nœuds (116, 117, 118) et dans lequel le système de vannes est configuré pour fournir l'itinéraire passant à travers au moins un nœud parmi la pluralité de nœuds.

3. Système d'irrigation selon la revendication 2, dans lequel le réseau de conduits comprend un premier étage (116), comprenant un premier nœud parmi la pluralité de nœuds et un premier agencement de vannes du système de vannes, et une pluralité de deuxièmes étages (117, 118) configurés en aval du premier étage, chacun comprenant un deuxième nœud parmi la pluralité de nœuds et un deuxième agencement de vannes du système de vannes, de préférence dans lequel le premier étage comprend une entrée de premier étage raccordée de manière fluidique à l'entrée du réseau de conduits, et une pluralité de sorties de premier étage, et dans lequel chacun de la pluralité de deuxièmes étages comprend une entrée de deuxième étage raccordée de manière fluidique à une sortie correspondante parmi la pluralité de sorties de premier étage et une pluralité de sorties de deuxième étage raccordées de manière fluidique à des sorties correspondantes parmi la pluralité de sorties, de préférence dans lequel le premier agencement de vannes est configuré pour raccorder de manière fluidique sélectivement l'entrée de premier étage et une sortie de premier étage parmi la pluralité de sorties de premier étage et plus préférablement dans lequel le deuxième agencement de vannes est configuré pour raccorder de manière fluidique sélectivement l'entrée de deuxième étage correspondante et une sortie de deuxième étage parmi la pluralité de sorties de deuxième étage, de préférence dans lequel au moins l'un parmi le premier agencement de vannes et le deuxième agencement de vannes comprend une pluralité de vannes d'arrêt (206, 207, 208, 209, 210, 211, 212), de préférence dans lequel une première vanne d'arrêt (206, 207, 208, 209) parmi la pluralité de vannes d'arrêt est ménagée à chaque sortie du nœud correspondant, de préférence dans lequel le nœud correspondant comprend en outre une pluralité de jonctions, dans lequel une deuxième vanne d'arrêt (210, 211) parmi la pluralité de vannes d'arrêt est ménagée entre chaque jonction parmi la pluralité de jonctions, de préférence dans lequel au moins l'un parmi le premier étage et chacun de la pluralité de deuxièmes étages comprend des moyens d'écoulement.

4. Système d'irrigation selon la revendication 3, dans lequel au moins l'un parmi le premier étage et chacun de la pluralité de deuxièmes étages comprend un moyen d'écoulement, et dans lequel les moyens d'écoulement comprennent une vanne d'entrée de gaz configurée pour fournir un écoulement de gaz après passage du lot de milieu à travers l'au moins l'un parmi le premier étage et la pluralité de deuxièmes étages, de préférence la vanne d'entrée de gaz est une vanne d'entrée d'air.

5. Système d'irrigation selon l'une quelconque des revendications précédentes, dans lequel les moyens d'écoulement comprennent un moyen de génération d'écoulement configuré pour fournir une différence de pression à travers chacun de la pluralité de lots de milieu d'irrigation le long de l'itinéraire correspondant et dans lequel l'unité de commande est en outre configurée pour faire fonctionner le moyen de génération d'écoulement, de préférence dans lequel le moyen de génération d'écoulement comprend une pompe, telle qu'une pompe à membrane.

6. Système d'irrigation selon l'une quelconque des revendications précédentes, dans lequel les moyens d'écoulement comprennent un moyen d'égalisation de pression (306, 320) configuré pour maintenir sensiblement une différence de pression à travers chacun de la pluralité de lots de milieu d'irrigation, de préférence dans lequel le moyen d'égalisation de pression comprend au moins une vanne à gaz configurée pour permettre à un gaz de s'écouler dans le système de conduits.

7. Système d'irrigation selon l'une quelconque des revendications précédentes, dans lequel les moyens de préparation de la pluralité de lots de milieu d'irrigation comprennent un récipient configuré pour contenir un lot de milieu d'irrigation parmi la pluralité de lots de milieu d'irrigation.

8. Système d'irrigation selon la revendication 7, dans lequel le récipient est configuré pour conditionner le lot de milieu d'irrigation, dans lequel le récipient comprend au moins l'un parmi :
- un élément chauffant (109) configuré pour conditionner la température du lot de milieu d'irrigation.
- au moins une entrée de récipient (107) configurée pour fournir une composante de milieu d'irrigation correspondant au lot de milieu d'irrigation, dans lequel la composante de milieu d'irrigation comprend au moins l'un parmi un lot d'eau, un engrais, un nutriment, un acide, une base, une solution tampon de pH, un électrolyte.
- des moyens de mélange (108) configurés pour mélanger le lot de milieu d'irrigation.
- au moins un moyen de mesure pour mesurer un paramètre du lot de milieu d'irrigation, dans lequel le paramètre est au moins l'un parmi un volume, une température, un pH et une conductivité électrique.

9. Système d'irrigation selon l'une quelconque des revendications précédentes, dans lequel au moins l'une parmi la pluralité de sorties comprend une buse qui est au moins l'une parmi une buse de pulvérisation, une buse d'atomiseur, une buse de brouillard, une buse de goutte-à-goutte.

10. Système d'irrigation selon l'une quelconque des revendications précédentes, dans lequel le réseau de conduits comprend une pluralité de conduits élastiques configurés pour être au moins élastiques ou conformables ou repliables ou extensibles ou flexibles.

11. Procédé de fonctionnement d'un système d'irrigation selon l'une quelconque des revendications précédentes, le procédé comprenant les étapes de :
• préparation d'un premier lot de milieu d'irrigation,
• détermination d'un premier itinéraire à travers le système de conduits pour fournir le premier lot de milieu d'irrigation à une première zone parmi une pluralité de zones pour la culture de plantes
• transport du premier lot de milieu d'irrigation préparé à travers le système de conduits le long du premier itinéraire
• évacuation du premier lot de milieu d'irrigation en entier du premier itinéraire
• préparation d'un deuxième lot de milieu d'irrigation,
• détermination d'un deuxième itinéraire à travers le système de conduits pour fournir le deuxième lot de milieu d'irrigation à une deuxième zone parmi une pluralité de zones pour la culture de plantes
• transport du deuxième lot de milieu d'irrigation à travers le système de conduits le long du deuxième itinéraire
• évacuation du deuxième lot de milieu d'irrigation en entier du deuxième itinéraire.

12. Procédé selon la revendication 11, dans lequel le transport de chacun des premier et deuxième lots de milieu d'irrigation à travers le système de conduits le long de l'itinéraire correspondant comprend l'étape de réglage de vannes d'un système de vannes du système de conduits conformément à l'itinéraire correspondant.

13. Procédé selon la revendication 11 ou 12, dans lequel chacune de la détermination du premier itinéraire et de la détermination du deuxième itinéraire comprend la sélection d'une pluralité de nœuds du système de conduits le long desquels le premier itinéraire ou le deuxième itinéraire doit passer.

14. Procédé selon la revendication 13, dans lequel au moins un nœud parmi la pluralité de nœuds associés au premier itinéraire chevauche au moins un nœud parmi la pluralité de nœuds associés au deuxième itinéraire.

15. Procédé selon l'une quelconque des revendications 11 à 14, dans lequel l'étape de transport du deuxième lot est précédée au moins en partie de l'étape de transport du premier lot, et dans lequel l'étape de transport du deuxième lot est initiée avant l'achèvement de l'étape d'évacuation du premier lot en entier.
